# DEMANDE DE BREVET EUROPEEN

(11) **EP 1 972 421 A1**
(43) Date de publication de la demande: **24.09.2008**
(21) Numéro de dépôt: 08356045.8
(22) Date de dépôt: 18.03.2008
(51) Int. Cl.: B29B 11/16, B29B 11/04

(54) **Ensemble fibreux pour pièce composite, pièce composite et procédé de fabrication d'une telle pièce composite**

(30) Priorité: 19.03.2007 FR 0701966
(71) Demandeur: SKF Aerospace France, 26240 Saint Vallier (FR)
(72) Inventeur: Maheo, Yves, 26140 Anneyron (FR); Perrier, Laurent, Francois, Christian, 39570 Montmorot (FR)
(74) Mandataire: Myon, Gérard Jean-Pierre

(57) **Abrégé**

Cet ensemble fibreux (1) pour pièce composite de travail hors plan comprend une première (3) et une deuxième (5) préformes fibreuses. La première préforme (3) comporte une plaque de fond (31) pourvue de deux ailes (33) transversales par rapport à la plaque de fond et disposées en regard l'une de l'autre, alors que la deuxième préforme (5) est une plaque positionnée transversalement par rapport à la plaque de fond (31) de la première préforme (3) et reçue en encastrement entre les ailes (33) de la première préforme.

## Description

La présente invention a trait à un ensemble fibreux pour pièce composite de travail hors plan, à une pièce composite de travail hors plan et à un procédé de fabrication d'une telle pièce composite.

Au sens de l'invention, on entend par pièce composite de travail hors plan une pièce en matériau composite permettant de relier des pièces et de transmettre des mouvements ou des efforts d'un premier plan à un deuxième plan transversal, notamment sensiblement perpendiculaire, par rapport au premier plan.

Dans le domaine aéronautique, il est connu d'utiliser des pièces composites de travail hors plan à section en T pour relier des pièces de structure. Notamment, il est connu d'utiliser une telle pièce composite à section en T pour réaliser des liaisons entre un plan, qui appartient par exemple à un fuselage et est relié à une semelle formant la barre horizontale de la pièce composite en T, et des bielles de structure ou de commande, reliées à un voile formant la barre verticale de la pièce composite en T. Une pièce composite à section en T peut être obtenue en adossant deux préformes à section en L et en injectant une résine polymère autour et/ou au sein de ces préformes. Une telle structure de pièce composite en T impose cependant des rayons de courbure à la jonction entre le voile et la semelle, ce qui génère des modes d'endommagement de la pièce difficilement maîtrisables, notamment en traction. Une pièce composite à section en T peut également être obtenue par assemblage de deux préformes planes positionnées perpendiculairement l'une par rapport à l'autre et injection d'une résine polymère autour et/ou au sein de ces préformes. Des contrevents disposés latéralement par rapport au voile sont alors nécessaires pour renforcer la liaison entre le voile et la semelle et réduire la flexion et le flambage du voile en compression. La réalisation de tels contrevents complexifie la fabrication de la pièce composite en T.

Par ailleurs, EP-A-0 390 685 décrit une pièce en matériau composite, obtenue par assemblage de préformes fibreuses en un ensemble fibreux, puis injection d'une résine polymère dans cet ensemble fibreux. Les préformes fibreuses de cette pièce composite sont des plaques exclusivement planes, qui sont positionnées transversalement les unes par rapport aux autres. Ces plaques sont structurellement incapables de recevoir la fixation de pièces de structure à relier, telles qu'une pièce de fuselage et une bielle de structure ou de commande, de sorte que la pièce composite décrite dans EP-A-0 390 685 ne permet pas la transmission de mouvements ou d'efforts d'une première pièce à une deuxième pièce disposée transversalement par rapport à la première pièce. Autrement dit, ce document ne concerne pas une pièce de travail hors plan. Des considérations techniques analogues s'appliquent à DE-A-102 51 580, WO-A-96/32527 et WO-A-2005/115728.

C'est aux inconvénients évoqués plus haut qu'entend plus particulièrement remédier l'invention en proposant un ensemble fibreux pour pièce composite de travail hors plan dont la fabrication est aisée et qui permet d'obtenir une pièce composite de travail hors plan présentant une bonne tenue mécanique en traction et en compression.

A cet effet, l'invention a pour objet un ensemble fibreux pour pièce composite de travail hors plan, comprenant une première et une deuxième préformes fibreuses, caractérisé en ce que la première préforme comporte une plaque de fond pourvue de deux ailes transversales par rapport à la plaque de fond et disposées en regard l'une de l'autre, alors que la deuxième préforme est une plaque positionnée transversalement par rapport à la plaque de fond de la première préforme et reçue en encastrement entre les ailes de la première préforme.

D'autres caractéristiques avantageuses d'un ensemble fibreux conforme à l'invention sont énoncées aux revendications 2 à 9.

L'invention a également pour objet une pièce composite de travail hors plan comprenant un ensemble fibreux tel que décrit ci-dessus et une matrice polymère.

Enfin, l'invention a pour objet un procédé de fabrication d'une pièce composite de travail hors plan, comprenant des étapes dans lesquelles :
- on fabrique une première préforme à section sensiblement en U, comportant une plaque de fond et deux ailes transversales par rapport à la plaque de fond ;
- on fabrique une deuxième préforme en forme de plaque ;
- on encastre la deuxième préforme entre les ailes de la première préforme, la deuxième préforme étant positionnée transversalement par rapport à la plaque de fond de la première préforme ;
- on solidarise les première et deuxième préformes;
- on injecte une résine polymère autour et/ou au sein des première et deuxième préformes.

Les caractéristiques et avantages de l'invention apparaîtront dans la description qui va suivre d'un mode de réalisation d'un ensemble fibreux et d'une pièce composite de travail hors plan selon l'invention, donnée uniquement à titre d'exemple et faite en se référant aux dessins annexés dans lesquels :
- la figure 1 est une vue en perspective éclatée d'un ensemble fibreux conforme à l'invention préalablement à la solidarisation des préformes ;
- la figure 2 est une vue à plus grande échelle du détail II de la figure 1 ; et
- la figure 3 est une vue en perspective de l'ensemble fibreux de la figure 1 prêt à être disposé dans un moule.

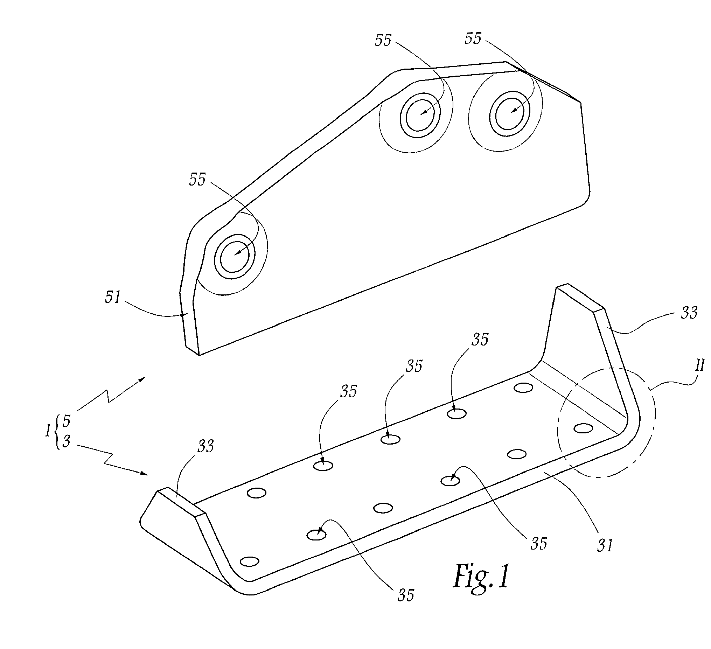

L'ensemble fibreux 1, représenté à la figure 1, est destiné à constituer un renfort fibreux pour une pièce composite de travail hors plan. La pièce composite obtenue par injection d'une matrice polymère dans l'ensemble fibreux 1 peut, par exemple, former une pièce de liaison entre un fuselage et des bielles de structure ou de commande d'un aéronef.

L'ensemble fibreux 1 comprend deux préformes 3 et 5, qui correspondent respectivement à une semelle et à un voile de la pièce composite de travail hors plan.

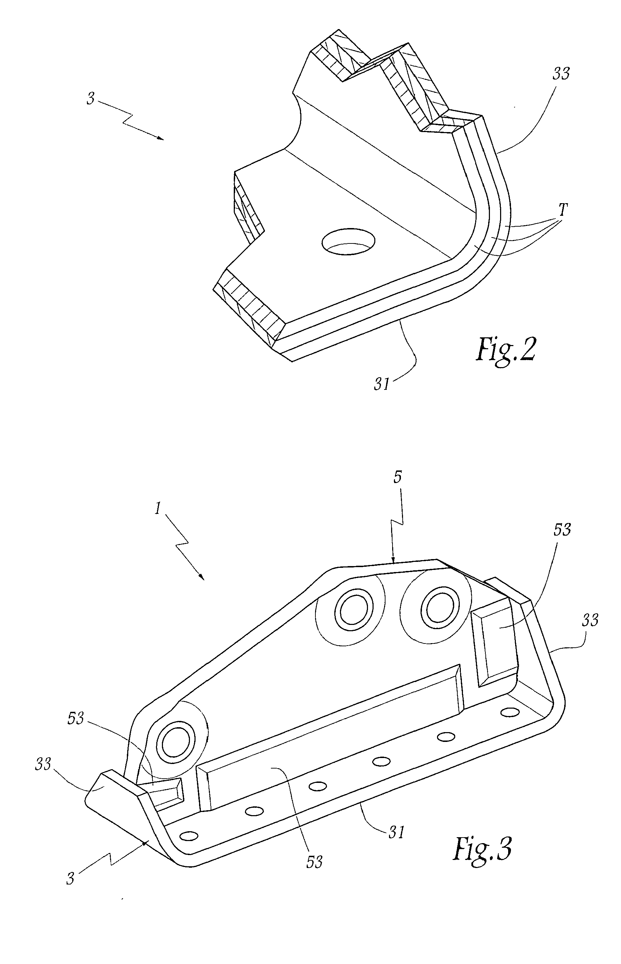

La préforme 3 comporte une plaque de fond 31 de forme allongée, pourvue latéralement de deux ailes 33 qui s'étendent transversalement par rapport à la plaque de fond 31 et sont disposées en regard l'une de l'autre. La préforme 3 est une plaque de tissus T de fibres de carbone incurvée latéralement pour former les deux ailes 33 sensiblement perpendiculaires à la plaque de fond 31. Plus spécifiquement, comme illustré à la figure 2, la préforme 3 est obtenue par empilement de couches successives de tissus T de fibres de carbone, l'empilement de tissus étant conformé avec une section transversale en U de manière à définir la plaque de fond 31 et les deux ailes 33. Ainsi, les tissus T de la préforme 3 s'étendent en continu dans la plaque de fond 31 et dans les ailes 33.

La deuxième préforme 5 est une plaque sensiblement plane de tissus de fibres de carbone empilés les uns sur les autres. La préforme 5 est destinée à être positionnée sensiblement perpendiculairement par rapport à la plaque de fond 31 de la préforme 3, en étant reçue en encastrement entre les ailes 33 de la préforme 3. A cet effet, la préforme 5 comporte un bord périphérique 51 sensiblement complémentaire de la forme intérieure du U défini par la préforme 3. Le bord 51 est ainsi adapté pour venir en appui à la fois contre les ailes 33 et contre la plaque de fond 31 de la préforme 3 en configuration encastrée de la préforme 5 dans la préforme 3. Lorsque les préformes 3 et 5 de l'ensemble fibreux 1 sont ainsi assemblées, la préforme 3 forme un berceau pour la préforme 5.

Comme montré sur la figure 1, les ailes 33 de la préforme 3 peuvent être de tailles différentes. Les ailes 33 sont adaptées au profil de la préforme 5, de manière à coopérer efficacement avec le bord 51.

L'empilement de tissus fibreux des préformes 3 et 5 peut être obtenu par pliage en couches successives d'un même tissu de fibres de carbone. En variante, plusieurs bandes de tissus individuelles peuvent être superposées pour former chaque préforme 3 ou 5 de l'ensemble fibreux 1, les fibres de carbone pouvant également être remplacées par des fibres de verre ou d'aramide.

Dans le mode de réalisation décrit et représenté, les préformes 3 et 5 sont solidarisées, en configuration encastrée de la préforme 5 dans la préforme 3, au moyen de clous composites passant à travers la plaque de fond 31 et les ailes 33 de la préforme 3 et dans le bord 51 de la préforme 5. La préforme 5 comporte, au voisinage du bord 51, des surépaisseurs 53 résultant du foisonnement de la matière de la préforme 5 lors de l'insertion des clous. En variante, la solidarisation des préformes 3 et 5 peut être réalisée au moyen de clous de tout type autre que des clous composites, par exemple des clous métalliques.

Comme visible sur la figure 1, la plaque de fond 31 de la préforme 3 est percée d'ouvertures 35, destinées au passage d'organes de fixation de la semelle de la pièce composite formée à partir du renfort fibreux 1 sur une pièce de structure, telle qu'un élément de fuselage. De manière similaire, la préforme 5 est percée d'ouvertures 55 destinées à l'accrochage de bielles. En variante, au lieu d'être prévues dans les préformes 3 et 5 de tissus secs, les ouvertures 35 et 55 peuvent être ménagées ultérieurement, dans la pièce composite obtenue par injection d'une matrice polymère autour et/ou au sein des préformes de l'ensemble fibreux 1.

Un procédé de fabrication de l'ensemble fibreux 1 conforme à l'invention et d'une pièce composite de travail hors plan comprenant l'ensemble fibreux 1 comme renfort fibreux comprend des étapes dans lesquelles :

Tout d'abord, on prépare les préformes 3 et 5 de l'ensemble fibreux 1. On forme la préforme 3 par empilement de couches successives de tissus T de fibres de carbone dans un moule à section en U, poudrage de l'empilement obtenu avec une poudre époxyde et chauffage à une température de l'ordre de 100°C. Pour la fabrication de la préforme 5, on forme tout d'abord une plaque parallélépipédique de tissus de fibres de carbone, par empilement de couches successives de tissus de fibres de carbone, poudrage de l'empilement obtenu avec une poudre époxyde et chauffage à une température de l'ordre de 100°C. La plaque rigide obtenue est ensuite découpée selon le profil souhaité de la préforme 5, les dimensions du bord 51 étant adaptées pour permettre l'encastrement à jeu réduit de la préforme 5 entre les ailes 33 de la préforme 3.

Lorsque les préformes 3 et 5 sont ainsi fabriquées, on encastre la préforme 5 entre les ailes 33 de la préforme 3 en positionnant la préforme 5 sensiblement perpendiculairement par rapport à la plaque de fond 31 de la préforme 3.

On solidarise alors les préformes 3 et 5 par cloutage, les clous passant à travers les deux préformes, ce qui crée les surépaisseurs 53 de la préforme 5.

L'ensemble fibreux 1 obtenu est ensuite introduit dans un moule de forme adapté, non représenté sur les figures, dans lequel on injecte, autour et/ou au sein des préformes 3 et 5, une résine polymère à l'état liquide, telle qu'une résine époxyde, à une température comprise entre environ 80°C et 160°C. En d'autres termes, la résine est injectée dans le moule de manière à imprégner les préformes 3 et 5. Lorsque la résine est en place à l'intérieur du moule, celle-ci est soumise à une étape de polymérisation à une température comprise entre environ 120°C et 180°C. Cette étape permet d'atteindre un état de vitrification de la résine, qui confère à la pièce composite ainsi fabriquée une bonne rigidité et un bon état de surface.

Un tel procédé de fabrication d'une pièce composite de travail hors plan est rapide et simple à mettre en oeuvre. La mise en moule des préformes 3 et 5 en tissus fibreux secs est aisée et rapide, grâce à la mise en forme et à l'assemblage des préformes préalablement à leur insertion dans le moule.

La pièce composite de travail hors plan obtenue grâce à ce procédé présente des propriétés mécaniques très satisfaisantes en traction et en compression. En effet, la forme en U de la préforme 3 permet d'augmenter la surface de contact entre les deux préformes, ce qui renforce la liaison entre le voile et la semelle et améliore la tenue de la pièce en traction. De plus, les ailes 33 de la préforme 3 assurent un transfert d'efforts entre le plan de la préforme 5 et le plan de la plaque de fond 31 de la préforme 3, ce qui garantit une répartition optimale des efforts dans la pièce sollicitée en traction et contribue également à renforcer la liaison entre le voile et la semelle.

En outre, grâce aux ailes 33 qui s'étendent perpendiculairement par rapport à la plaque de fond 31, la préforme 3 forme un berceau de renforcement de la préforme 5, ce qui permet de lutter efficacement contre la flexion et le flambage du voile lorsque la pièce composite est sollicitée en compression. Il n'est alors pas nécessaire de prévoir des contrevents s'étendant transversalement à la jonction entre les deux préformes, ce qui permet de simplifier la fabrication d'un ensemble fibreux et d'une pièce composite de travail hors plan conformes à l'invention.

L'invention n'est pas limitée à l'exemple décrit et représenté. En particulier, la solidarisation des préformes 3 et 5 préalablement à l'injection d'une matrice polymère autour et/ou au sein de ces préformes peut être réalisée selon des techniques autres que le cloutage. A titre d'exemple, les préformes 3 et 5 peuvent être pourvues de motifs complémentaires, la solidarisation des préformes 3 et 5 étant alors obtenue grâce à la mise en prise de leurs motifs respectifs, lors de l'encastrement de la préforme 5 entre les ailes 33 de la préforme 3. Un ou plusieurs motifs en saillie peuvent par exemple être ménagés à l'intérieur du U formé par la préforme 3, alors qu'un ou plusieurs motifs en creux complémentaires sont ménagés sur le bord 51 de la préforme 5, ces motifs présentant deux à deux des surfaces conjuguées destinées à être en contact lorsque les préformes 3 et 5 sont emboîtées l'une dans l'autre. Les surfaces conjuguées des motifs de l'une et l'autre préformes sont alors prévues avec une étendue suffisante pour permettre la tenue de la préforme 5 encastrée dans la préforme 3. La solidarisation des préformes par une telle complémentarité de motifs a l'avantage de ne pas nécessiter d'organes de fixation extérieurs aux préformes.

## Revendications

1. Ensemble fibreux (1) pour pièce composite de travail hors plan, comprenant une première (3) et une deuxième (5) préformes fibreuses, **caractérisé en ce que** la première préforme (3) comporte une plaque de fond (31) pourvue de deux ailes (33) transversales par rapport à la plaque de fond et disposées en regard l'une de l'autre, alors que la deuxième préforme (5) est une plaque positionnée transversalement par rapport à la plaque de fond (31) de la première préforme (3) et reçue en encastrement entre les ailes (33) de la première préforme.

2. Ensemble fibreux selon la revendication 1, **caractérisé en ce que** la première préforme (3) comporte des moyens (35) de fixation d'une première pièce, alors que la deuxième préforme (5) comporte des moyens (55) de fixation d'une deuxième pièce disposée transversalement par rapport à la première pièce.

3. Ensemble fibreux selon l'une quelconque des revendications 1 ou 2, **caractérisé en ce que** la deuxième préforme (5) comporte un bord périphérique (51) adapté pour venir en appui à la fois contre les ailes (33) et contre la plaque de fond (31) de la première préforme (3), en configuration encastrée de la deuxième préforme entre les ailes de la première préforme.

4. Ensemble fibreux selon l'une quelconque des revendications précédentes, **caractérisé en ce que** la deuxième préforme (5) est positionnée sensiblement perpendiculairement par rapport à la plaque de fond (31) de la première préforme (3), les ailes (33) de la première préforme étant sensiblement perpendiculaires à la plaque de fond (31) et à la deuxième préforme.

5. Ensemble fibreux selon l'une quelconque des revendications précédentes, **caractérisé en ce que** les première (3) et deuxième (5) préformes comportent des tissus fibreux empilés, les tissus de la première préforme (3) s'étendant en continu dans la plaque de fond (31) et dans les ailes (33).

6. Ensemble fibreux selon l'une quelconque des revendications précédentes, **caractérisé en ce qu'**il comprend des organes de solidarisation des première (3) deuxième (5) préformes en configuration encastrée de la deuxième préforme entre les ailes (33) de la première préforme.

7. Ensemble fibreux selon la revendication 6, **caractérisé en ce que** les organes de solidarisation comprennent des clous passant à travers la première (3) et la deuxième (5) préformes.

8. Ensemble fibreux selon l'une quelconque des revendications 6 ou 7, **caractérisé en ce que** les organes de solidarisation comprennent des motifs complémentaires de la première (3) et de la deuxième (5) préformes, les première et deuxième préformes étant aptes à être solidarisées par mise en prise de leurs motifs respectifs.

9. Ensemble fibreux selon l'une quelconque des revendications précédentes, **caractérisé en ce qu'**il est constitué en fibres de carbone, de verre ou d'aramide.

10. Pièce composite de travail hors plan, **caractérisée en ce qu'**elle comprend un ensemble fibreux (1) selon l'une quelconque des revendications précédentes et une matrice polymère.

11. Procédé de fabrication d'une pièce composite de travail hors plan, **caractérisé en ce qu'**il comprend des étapes dans lesquelles :
- on fabrique une première préforme (3) à section sensiblement en U, comportant une plaque de fond (31) et deux ailes (33) transversales par rapport à la plaque de fond ;
- on fabrique une deuxième préforme (5) en forme de plaque ;
- on encastre la deuxième préforme (5) entre les ailes (33) de la première préforme (3), la deuxième préforme (5) étant positionnée transversalement par rapport à la plaque de fond (31) de la première préforme (3) ;
- on solidarise les première (3) et deuxième (5) préformes ;
- on injecte une résine polymère autour et/ou au sein des première (3) et deuxième (5) préformes.
